(19) Europäisches Patentamt
European Patent Office
Office européen des brevets

(11) **EP 2 759 055 B1**

(12) **EUROPÄISCHE PATENTSCHRIFT**

(45) Veröffentlichungstag und Bekanntmachung des Hinweises auf die Patenterteilung:
**16.09.2015 Patentblatt 2015/38**

(21) Anmeldenummer: **12786896.6**

(22) Anmeldetag: **02.11.2012**

(51) Int Cl.:
*H02P 27/16* (2006.01)   *H02P 1/46* (2006.01)
*H02P 6/00* (2006.01)   *H02P 6/20* (2006.01)
*H02P 6/22* (2006.01)

(86) Internationale Anmeldenummer:
**PCT/EP2012/071693**

(87) Internationale Veröffentlichungsnummer:
**WO 2013/068301 (16.05.2013 Gazette 2013/20)**

(54) **VERFAHREN UND ANORDNUNG ZUM BETRIEB VON SYNCHRONMOTOREN**

METHOD AND ASSEMBLY FOR OPERATING SYNCHRONOUS MOTORS

PROCÉDÉ ET DISPOSITIF POUR FAIRE FONCTIONNER DES MOTEURS SYNCHRONES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2011 DE 102011085853**

(43) Veröffentlichungstag der Anmeldung:
**30.07.2014 Patentblatt 2014/31**

(73) Patentinhaber: **Siemens Aktiengesellschaft 80333 München (DE)**

(72) Erfinder: **BENECKE, Marcel 39108 Magdeburg (DE)**

(56) Entgegenhaltungen:
**DE-A1-102010 008 814**

**Beschreibung**

Die Erfindung betrifft eine Einrichtung zum Betrieb von Synchronmotoren und ein zugehöriges Verfahren zum Betrieb von Synchronmotoren mit dreiphasigen Drehstromstellern, die an ein Drehstromnetz angeschlossen sind und die wenigstens zwei Halbleitersteller, beispielsweise antiparallel geschaltete Thyristoren, umfassen. Dabei wird insbesondere der Anlauf des Synchronmotors behandelt. Die Offenlegungsschrift DE 10 2010 008 814, offenbart ein Verfahren zur Ausfenerung einer Synchronmaschine durch einen dreiphasigen Drehstromsteller, der an ein Drehstromnetz angeschlossen ist.

Drehstromsynchronmotoren ohne Anlaufkäfig sind prinzipbedingt an die Frequenz des speisenden Drehstromnetzes gebunden. Ein Anlauf, also Hochfahren solcher Motoren ist daher nicht direkt am Netz möglich. Vielmehr ist zwischen dem Drehstromnetz und der Synchronmaschine eine Einrichtung nötig, die das Hochfahren erst ermöglicht. Hierzu wird üblicherweise ein Frequenzumrichter verwendet. Der Frequenzumrichter besteht aus einem Gleichrichter, einem Zwischenkreis(-kondensator) und einem Wechselrichter. Er wird verwendet, um einen Drehstrom mit einstellbarer Frequenz zu erzeugen.

Es ist Aufgabe der Erfindung, ein Verfahren und eine Anordnung anzugeben, mit denen bei sehr geringem Aufwand an leistungselektronischen Bauelementen ein Betrieb einer Synchronmaschine an einem Drehstromnetz ermöglicht wird. Dabei soll insbesondere auch das Anlaufen der Synchronmaschine ermöglicht werden.

Die Aufgabe wird durch ein Verfahren mit den Merkmalen von Anspruch 1 gelöst. Eine weitere Lösung besteht in einer Anordnung gemäß dem Anspruch 8. Weiterbildungen der Erfindung sind in den abhängigen Ansprüchen angegeben.

Bei dem erfindungsgemäßen Verfahren zum Betrieb einer Synchronmaschine mittels eines dreiphasigen Drehstromstellers, der an ein Drehstromnetz angeschlossen wird, werden folgende Schritte durchgeführt. Es erfolgt eine Bestimmung eines ersten Parameters in Form der Phasendifferenz zwischen Polradspannung der Synchronmaschine und Netzspannung des Drehstromnetzes. Dies kann beispielsweise durch Messung der Drehstromnetz-Spannung und Polradspannung und entsprechenden Vergleich erfolgen. Weiterhin wird eine Bestimmung der Drehzahl des Rotors der Synchronmaschine als zweiten Parameter durchgeführt. Als dritter Parameter wird die Phasenlage des Drehstromnetzes bestimmt. Mit anderen Worten wird ermittelt, wie weit der aktuelle Zeitpunkt vom letzten Nulldurchgang einer Spannung entfernt liegt.

Ausgehend von den drei Parametern wird eine Entscheidungskennzahl anhand einer gespeicherten und vorab berechneten Datentabelle bestimmt. Die Datentabelle ordnet dabei Wertetripeln aus Phasendifferenz, Phasenlage und Drehzahl eine Entscheidungskennzahl zu. Anhand der Entscheidungskennzahl wird wenigstens ein Schaltzeitpunkt bestimmt, an dem die Halbleitersteller angeschaltet werden.

Hierdurch wird vorteilhaft erreicht, dass nur zu solchen Schaltzeitpunkten eine Einschaltung der Halbleitersteller vorgenommen wird, zu denen ein positives Drehmoment erwartet wird. Dabei ist mit positivem Drehmoment ein Drehmoment gemeint, das für einen Hochfahrvorgang nur in eine der beiden möglichen Richtungen weist. Mit anderen Worten wird nur beschleunigendes Drehmoment erzeugt, während bremsendes Drehmoment vermieden wird. Dabei ist aber eben nicht die Verwendung eines Frequenzumrichters nötig, sondern es wird lediglich ein Drehstromsteller verwendet.

Dabei wird gemäß einer vorteilhaften Ausgestaltung der Erfindung anhand der Entscheidungskennzahl ermittelt, ob der gegenwärtige Zeitpunkt als Schaltzeitpunkt verwendet wird. Mit anderen Worten wird anhand der ermittelten Parameter stets für den aktuellen Zeitpunkt, also jetzt, entschieden, ob die Halbleitersteller angeschaltet werden. Das Verfahren wird dann zweckmäßig regelmäßig in möglichst geringen zeitlichen Abständen ausgeführt.

In einer weiteren Ausgestaltung der Erfindung wird ermittelt, ob die Schalter der Drehstromsteller abgeschaltet sind, und nur in diesem Fall der gegenwärtige Zeitpunkt als Schaltzeitpunkt möglicherweise verwendet. Mit anderen Worten wird lediglich dann ein Einschalten der Halbleitersteller in Betracht gezogen, wenn diese aktuell abgeschaltet sind. Dieses Vorgehen ist zweckmäßig, da die Datentabelle unter der Voraussetzung erstellt wird, dass keine Ströme fließen. Sind die Halbleitersteller angeschaltet, so fließt aber Strom und die Datentabelle liefert für den aktuellen Zeitpunkt eine falsche Entscheidungskennzahl.

In einer vorteilhaften Ausgestaltung und Weiterbildung der Erfindung wird die Entscheidungskennzahl mit einem festlegbaren Schwellwert verglichen, um einen Schaltzeitpunkt zu ermitteln. Alternativ können die Entscheidungskennzahlen auch in Form von Wahrheitswerten gespeichert sein, was einen Vergleich mit einem Zahlenwert erübrigt.

Bevorzugt werden die Entscheidungskennzahlen der Datentabelle aus einem sich ergebenden Drehmomentverlauf für die Synchronmaschine berechnet, der sich bei Anschaltung der Halbleitersteller für Wertetripel aus Phasendifferenz, Phasenlage und Drehzahl ergibt. Werden Thyristoren in den Drehstromstellern verwendet, so ergibt sich nach der Zündung der Thyristoren eine automatische Wiederabschaltung und somit immer eine endliche Anschaltzeit, für die der Drehmomentverlauf berechnet werden kann.

Die Entscheidungskennzahlen der Datentabelle können dabei beispielsweise einen maximal auftretenden Strom berücksichtigen, der sich bei Anschaltung der Drehstromsteller für Wertetripel aus Phasendifferenz, Phasenlage und Drehzahl ergibt. Alternativ oder zusätzlich ist es möglich, sowohl ein mittleres Drehmoment über die Anschaltzeit als auch das effektive Drehmoment über die Anschaltzeit berücksichtigen.

Die erfindungsgemäße Anordnung zum Betrieb einer Synchronmaschine ist ausgestaltet zur Durchführung des beschriebenen Verfahrens. Sie umfasst einen dreiphasigen Drehstromsteller, der an ein Drehstromnetz anschließbar ist und wenigstens zwei Halbleitersteller für die Phasen des Drehstromnetzes umfasst. Weiterhin umfasst die Anordnung:

- eine Einrichtung zur Bestimmung der Phasendifferenz zwischen Polradspannung der Synchronmaschine und Netzspannung des Drehstromnetzes,
- eine Einrichtung zur Bestimmung der Drehzahl des Rotors der Synchronmaschine,
- eine Einrichtung zur Bestimmung der Phasenlage des Drehstromnetzes,
- eine Speichereinrichtung und eine in der Speichereinrichtung abgelegte Datentabelle, die Werten für die Phasendifferenz, Phasenlage und Drehzahl eine Entscheidungskennzahl zuordnet sowie
- eine Steuerungseinrichtung, ausgestaltet, aus den ermittelten Werten für Phasendifferenz, Phasenlage und Drehzahl die Entscheidungskennzahl und aus der Entscheidungskennzahl wenigstens einen Schaltzeitpunkt zu ermitteln, zu denen die Halbleitersteller angeschaltet werden.

Der Drehstromsteller umfasst zumindest zwei Halbleitersteller, zweckmäßig drei Halbleitersteller, einen pro Phase. Bei den Halbleiterschaltelementen kann es sich beispielsweise um Wechselstromsteller handeln. Die Wechselstromsteller können beispielsweise als Paare antiparallel geschalteter Thyristoren oder als Triacs realisiert sein. Es könnten aber auch IGBTs oder andere Typen von Halbleiterschaltern verwendet werden. Der Drehstromsteller ist an ein Drehstromnetz angeschlossen. Die Ständerwicklung des Synchronmotors ist dabei bevorzugt in Sternschaltung ohne Neutralleiter verschaltet. Die Wechselstromsteller werden zu bestimmten Zeitpunkten aktiviert bzw. gezündet, d.h. leitend geschaltet oder zur Leitung vorbereitet.

Bevorzugt umfasst die Anordnung eine Einrichtung zur Ermittlung, ob alle Halbleiterschaltelemente abgeschaltet, bzw. im Falle von Thyristoren verloschen sind. Beispielsweise kann hierzu eine Einrichtung zur Strommessung eingesetzt werden.

Bei der Einrichtung zur Bestimmung der Drehzahl des Rotors der Synchronmaschine kann es sich beispielsweise um eine Einrichtung zur Bestimmung des mechanischen Lagewinkels des Rotors handeln. Der mechanische Lagewinkel gibt zweckmäßig die Lage des Rotors in Bezug auf eine festlegbare raumfeste Position an. Der Lagewinkel erstreckt sich dabei zweckmäßigerweise von 0° bis 360°. Aus der zeitlichen Änderung des Lagewinkels wird auf die Drehzahl geschlossen. Auch andere Messungen der Drehzahl sind möglich.

Weiterhin wird die Phasenlage des Drehstromnetzes in wenigstens einer der Phasen der Ständerwicklung ermittelt. Hierbei können auch verschiedene Meßmethoden verwendet werden. Für das beschriebene Verfahren und die Einrichtung kommt es darauf an, den zeitlichen Abstand vom letzten Nulldurchgang der Spannung einer Phase zu ermitteln. Dieser Abstand kann als Winkel oder Zeit oder auf andere Weise dargestellt, ermittelt und verwendet werden.

Das beschriebene Verfahren wird insbesondere softwaremäßig realisiert. Bezogen auf die beschriebene Einrichtung weist diese insbesondere eine Steuereinheit auf, die ausgestaltet ist, das beschriebene Vorgehen umzusetzen. Es kann daher einfach in bestehenden Drehstromstellern ohne zusätzlichen Aufwand an Bauelementen implementiert werden. Dabei ist eine Erfassung der Rotordrehzahl nötig. Vorteilhaft ist es, wenn eine in der Synchronmaschine vorgesehene Steuereinheit, die heute zweckmäßig als Mikroprozessor realisiert ist, die Steuerung des Drehstromstellers übernimmt. In diesem Fall liegen Daten von beispielsweise einem in der Synchronmaschine integrierten Lagegeber bereits automatisch vor. Weiterhin kann eine solche Synchronmaschine bereits den Drehstromsteller umfassen, also als Gesamteinheit realisiert sein, die somit direkt an ein Drehstromnetz anschließbar ist.

Ein bevorzugtes, jedoch keinesfalls einschränkendes Ausführungsbeispiel für die Erfindung wird nunmehr anhand der Zeichnung näher erläutert. Dabei sind die Merkmale schematisiert dargestellt und sich entsprechende Merkmale sind mit gleichen Bezugszeichen markiert. Die Figuren zeigen dabei im Einzelnen:

Figur 1          ein Ersatzschaltbild eines Drehstromstellers mit angeschlossener Synchronmaschine und
Figur 2 und 3    Diagramme zur Verdeutlichung der Zündzeitpunkte,
Figur 4          ein Ablaufschema für die Steuerung der Synchronmaschine.

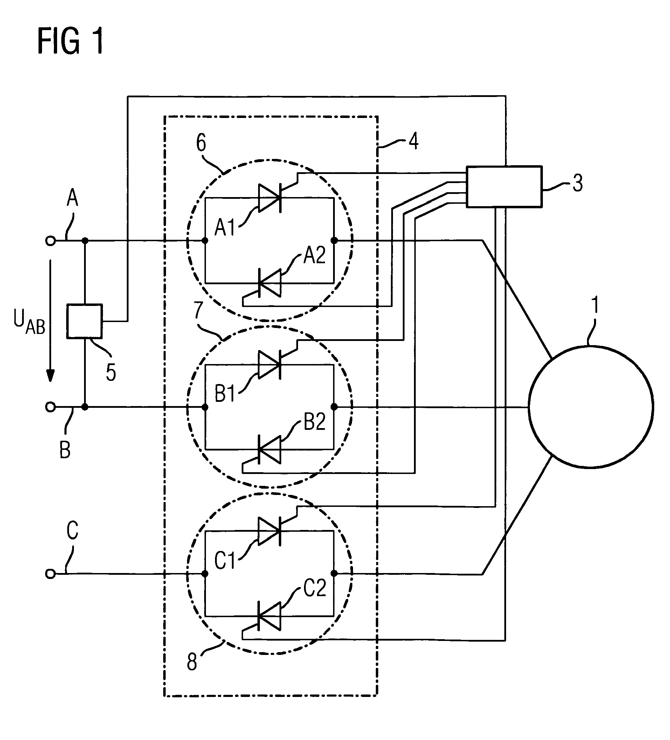

In Figur 1 ist eine Drehstrom-Synchronmaschine 1 über einen dreiphasigen Drehstromsteller 4 an die Phasen A, B, C eines Drehstromnetzes angeschlossen. Jeder der Phasen A, B, C ist ein Halbleitersteller 6, 7, 8 aus zwei antiparallel geschalteten Thyristoren A1, A2, B1, B2, C1, C2 zugeordnet. Die Zündelektroden der Thyristoren A1, A2, B1, B2, C1, C2 sind an eine Steuereinrichtung 3 angeschlossen, mit der die zum Zünden der Thyristoren A1, A2, B1, B2, C1, C2 erforderlichen Zündsignale bereitgestellt werden. Die Steuereinrichtung 3 steuert auch den Phasenanschnittwinkel. Die Steuereinrichtung 3 ist durch einen Mikrocontroller realisiert. Zwischen zwei Phasen A, B, C des Netzes, beispielsweise zwischen den Klemmen A und B des Netzes in Figur 1, ist eine Spannungsmesseinrichtung 5 geschaltet, an deren Ausgang die zwischen diesen beiden Klemmen A und B auftretende Netzspannung $U_{AB}$ bereitsteht. Weitere, nicht gezeigte Spannungsmesseinrichtungen können ebenfalls für die anderen beiden Phasenpaare vorliegen.

In einer Ausführungsvariante sind die Steuereinrichtung 3 und der Drehstromsteller 4 eine von der Drehstrom-Synchronmaschine 1 separate Einheit, also als separate Motorsteuereinrichtung realisiert. In einer zweiten Ausführungsvariante sind die Steuereinrichtung 3 und der Drehstromsteller 4 Teil der Drehstrom-Synchronmaschine 1. In diesem Fall sind zweckmäßig die Funktionen der Steuereinrichtung 3 in einen bereits vorhandenen Mikroprozessor in der Drehstrom-Synchronmaschine 1 integriert. Im vorliegenden Ausführungsbeispiel dient die Steuereinrichtung 3 dazu, ein geeignetes Programm zu bearbeiten, mit dem softwaremäßig der Betrieb der Einrichtung erfolgen kann.

Zur Beschleunigung der Synchronmaschine aus dem Stillstand ist beschleunigendes Drehmoment erforderlich. Hierfür ist es notwendig, die Statorwicklung derart zu bestromen, dass positives Drehmoment (inneres Drehmoment) erzeugt wird, welches sowohl eine Beschleunigung der Maschine bewirkt, als auch das Gegenmoment der Last kompensiert. Das innere Drehmoment ist nach der Gleichung 1 neben den Strömen auch von der Rotorlage abhängig.

$$m_i = \frac{3}{2} p \cdot \psi_p \cdot \left( i_{1A} \cdot (-\sin \vartheta_R) + (i_{1B} - i_{1C}) \cdot \cos \vartheta_R \cdot \frac{1}{\sqrt{3}} \right)$$

Dabei sind $m_i$ das innere Drehmoment, p die Polpaarzahl, $i_n$ Statorströme, $\vartheta_R$ der Polradwinkel elektrisch und $\psi_p$ die Magnetflussverkettung.

Um durch Zündung der Thyristoren A1, A2, B1, B2, C1, C2 zu einem bestimmten Zeitpunkt Ströme zu erzeugen, die einen günstigen Drehmomentverlauf liefern, werden Strom und Drehmoment für bestimmte Parameterkonstellationen, nämlich Drehzahl und Phasenlage der Netzspannung und der durch den Rotor induzierten Spannung, für die Synchronmaschine 1 mit bekannten Maschinenparametern im Voraus berechnet. Die ermittelten Parameterkonstellationen für günstiges Drehmoment dienen als Grundlage für die Definition der Zündbedingungen.

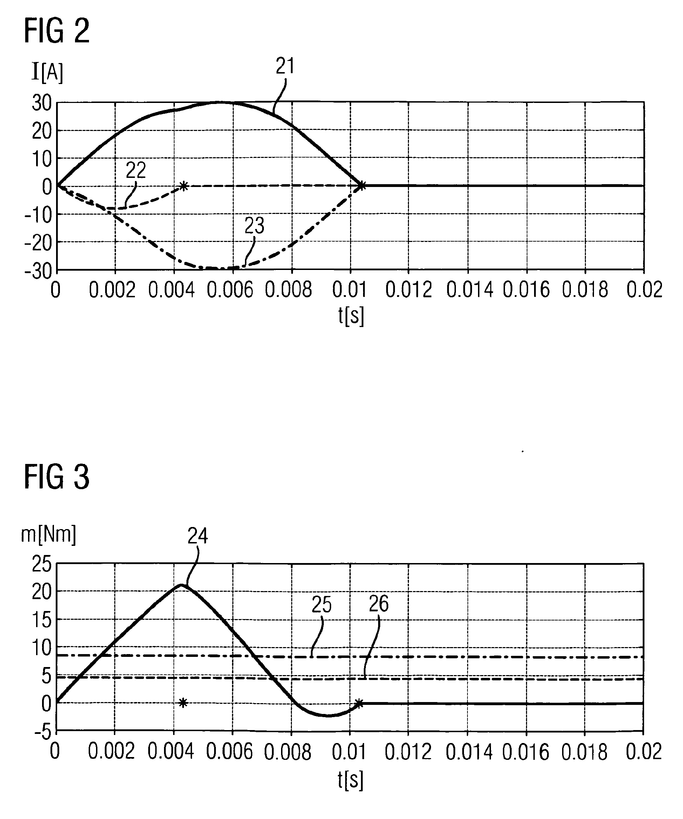

Die Zündung und deren Vorausberechnung erfolgt stets dreiphasig. Nach einer gewissen Zeit erlischt ein Thyristor A1, A2, B1, B2, C1, C2 und anschließend jeweils die beiden weiteren Thyristoren A1, A2, B1, B2, C1, C2. Die Figuren 2 und 3 zeigen einen beispielhaften Verlauf von den Phasenströmen 21, 22, 23 und dem Drehmoment 24 nach der Zündung der Thyristoren A1, A2, B1, B2, C1, C2 beim Zeitpunkt t = 0. Dabei ergeben sich für den gezeigten Verlauf ein effektives Drehmoment 25 und ein arithmetischer Mittelwert für das Drehmoment 26. Die letzten beiden Werte gelten für den gesamten gezeigten Verlauf des Drehmoments 24 und sind daher nur jeweils eine Zahl und von der ablaufenden Zeit unabhängig.

Nach Verlöschen der Thyristoren A1, A2, B1, B2, C1, C2 kann eine erneute Zündung erfolgen. Die Berechnung der Ströme und des Drehmoments erfolgt numerisch unter der Annahme einer unendlichen Massenträgheit des Systems während der gesamten Stromleitdauer. Damit können direkt allgemeingültige Lösungen von aufgestellten Differentialgleichungen für die Ströme genutzt werden, in die jeweils die Maschinenparameter sowie die potentiellen Zündparameter eingesetzt werden müssen. Die potentiellen Zündparameter sind der Einschaltzeitpunkt bezogen auf den Netzspannungsnulldurchgang und der Differenzwinkel zwischen den Raumzeigern der Netzspannung und der Polradspannung (im stromlosen Zustand) bei der aktuellen Drehzahl. In Abhängigkeit dieser Parameter werden Ströme und erzeugtes Drehmoment sowie dessen arithmetischer Mittelwert berechnet. Mit diesen Daten wird durch Parametervariation ein Drehmomentkennfeld erstellt und gespeichert.

Zusätzlich erfolgt im vorliegenden Beispiel die Bewertung der Drehmomentwerte mit einer Bewertungsfunktion:

$$g = \frac{1}{2} \cdot \frac{\overline{m}}{\overline{m}_{\max}} + \frac{1}{2} \cdot \frac{\overline{m}}{m_{eff}}$$

Dabei ist $\overline{m}$ das arithmetische Mittel des Drehmoments bis zum Verlöschen aller Thyristoren A1, A2, B1, B2, C1, C2, $\overline{m}_{\max}$ das Maximum der so ermittelten Drehmomente im gesamten Kennfeld für eine Drehzahl und $m_{eff}$ das effektive Drehmoment.

Zusätzlich wird der maximal fließende Strom ermittelt und mit einem definierten zulässigen Maximalstrom verglichen. Das Ergebnis der Parametervariation wird mit der Drehmomentbewertungsfunktion und mit der Strommaximums-Betrachtung maskiert. Damit sind Zündparameter für günstige Drehmomentverläufe herausgefiltert. Die Drehmomentkennfelder beziehungsweise deren Bewertung werden in einer sog. Look-Up-Table (LUT) in der Steuereinrichtung 3 hinterlegt.

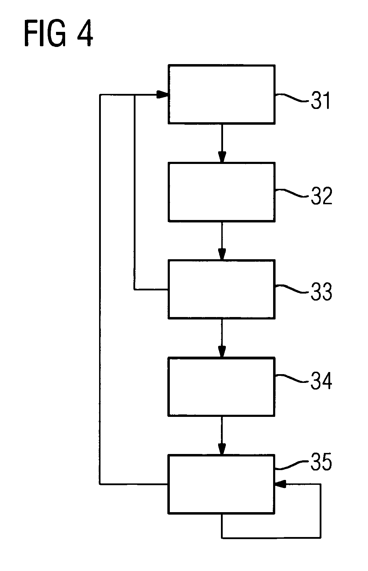

Damit steht nach Berechnung eine Zuordnung bewerteter zu erwartender Drehmomentverläufe für eine definierte Zahl möglicher Zündzeitpunkte zur Verfügung und es können entsprechend der erfassten Parameter Zündungen der Thyristoren A1, A2, B1, B2, C1, C2 durchgeführt werden. Dabei wird der folgende in Figur 4 gezeigte Zyklus durchlaufen:

In einem ersten Schritt 31 werden Netzspannung, Polradspannung, und Drehzahl gemessen. In einem zweiten Schritt 32 werden daraus die Parameter für die Lage in der Look-Up-Table bestimmt. Dies sind die relative Phasenlage von Polradspannung zu Netzspannung, die verstrichene Zeit seit dem letzten Nulldurchgang einer der Netzspannungen und die Drehzahl selbst.

In einem dritten Schritt 33 findet die Prüfung der Zündmöglichkeit laut LUT statt. Falls ein guter Zeitpunkt zur Zündung gegeben ist, wird zum vierten Schritt 34 weitergegangen; ansonsten zum ersten Schritt 31 zurückgekehrt. Im vierten Schritt 34 wird die dreiphasige Zündung durchgeführt.

Danach wird in einem fünften Schritt 35 auf das Verlöschen aller Thyristoren A1, A2, B1, B2, C1, C2 gewartet. Ist das Erlöschen festgestellt, so wird für einen erneuten Zyklus zum ersten Schritt 31 zurückgekehrt.

Für die Prüfung der Zündmöglichkeit laut LUT wird der Ergebniswert aus der Look-Up-Table mit einem Schwellwert verglichen. Ist der Schwellwert überschritten, so können die Thyristoren A1, A2, B1, B2, C1, C2 gezündet werden. Die ersten drei Ablaufschritte werden dabei im vorliegenden Beispiel im Takt von ca. 1 ms wiederholt. Der tatsächliche Takt hängt von den Fähigkeiten der Hardware und der Programmierung ab. Sind die Thyristoren A1, A2, B1, B2, C1, C2 gezündet, wird anhand einer Strommessung ermittelt, wann sämtliche Thyristoren A1, A2, B1, B2, C1, C2 wieder verloschen sind. Erst dann wird wieder ein neuer Zündzeitpunkt gesucht.

**Patentansprüche**

1. Verfahren zum Betrieb einer Synchronmaschine (1) mittels eines dreiphasigen Drehstromstellers (4), der an ein Drehstromnetz angeschlossen wird, mit folgenden Schritten:

   - Bestimmung der Phasendifferenz zwischen Polradspannung der Synchronmaschine (1) und Netzspannung des Drehstromnetzes,
   - Bestimmung der Drehzahl des Rotors der Synchronmaschine,
   - Bestimmung der Phasenlage des Drehstromnetzes,
   - Bestimmung einer Entscheidungskennzahl anhand einer gespeicherten und vorab berechneten Datentabelle, die Wertetripeln aus Phasendifferenz, Phasenlage und Drehzahl eine Entscheidungskennzahl zuordnet,
   - Bestimmung von wenigstens einem Schaltzeitpunkt anhand der Entscheidungskennzahl, wobei zu dem Schaltzeitpunkt die Halbleitersteller (6...8) angeschaltet werden.

2. Verfahren gemäß Anspruch 1, bei dem anhand der Entscheidungskennzahl ermittelt wird, ob der gegenwärtige Zeitpunkt als Schaltzeitpunkt verwendet wird.

3. Verfahren gemäß Anspruch 2, bei dem ermittelt wird, ob die Schalter (A1, A2, B1, B2, C1, C2) der Drehstromsteller (6...8) abgeschaltet sind, und nur in diesem Fall der gegenwärtige Zeitpunkt als Schaltzeitpunkt verwendet wird.

4. Verfahren gemäß einem der vorangehenden Ansprüche, bei dem die Entscheidungskennzahl mit einem festlegbaren Schwellwert verglichen wird, um einen Schaltzeitpunkt zu ermitteln.

5. Verfahren gemäß einem der vorangehenden Ansprüche, bei dem die Entscheidungskennzahlen der Datentabelle aus einem sich ergebenden Drehmomentverlauf für die Synchronmaschine (1) berechnet werden, der sich bei Anschaltung der Drehstromsteller (6...8) für Wertetripel aus Phasendifferenz, Phasenlage und Drehzahl ergibt.

6. Verfahren gemäß Anspruch 5, bei dem die Entscheidungskennzahlen der Datentabelle einen maximal auftretenden Strom berücksichtigen, der sich bei Anschaltung der Drehstromsteller (6...8) für Wertetripel aus Phasendifferenz, Phasenlage und Drehzahl ergibt.

7. Verfahren gemäß Anspruch 5 oder 6, bei dem die Entscheidungskennzahlen der Datentabelle sowohl ein mittleres Drehmoment über einen festlegbaren Zeitraum als auch das effektive Drehmoment über den Zeitraum berücksichtigen, welche sich bei Anschaltung der Drehstromsteller (6...8) für Wertetripel aus Phasendifferenz, Phasenlage und Drehzahl ergeben.

8. Anordnung zum Betrieb einer Synchronmaschine (1), ausgestaltet zur Durchführung eines Verfahrens gemäß einem der vorangehenden Ansprüche, mit

    - einem dreiphasigen Drehstromsteller (6...8), der an ein Drehstromnetz anschließbar ist und wenigstens zwei Halbleitersteller (A1, A2, B1, B2, C1, C2) für die Phasen (A, B, C) des Drehstromnetzes umfasst,
    - einer Einrichtung zur Bestimmung der Phasendifferenz zwischen Polradspannung der Synchronmaschine und Netzspannung des Drehstromnetzes,
    - einer Einrichtung zur Bestimmung der Drehzahl des Rotors der Synchronmaschine,
    - einer Einrichtung zur Bestimmung der Phasenlage des Drehstromnetzes,
    - einer Speichereinrichtung,
    - einer in der Speichereinrichtung abgelegten Datentabelle, die Werten für die Phasendifferenz, Phasenlage und Drehzahl eine Entscheidungskennzahl zuordnet,
    - einer Steuerungseinrichtung, ausgestaltet, aus den ermittelten Werten für Phasendifferenz, Phasenlage und Drehzahl die Entscheidungskennzahl und aus der Entscheidungskennzahl wenigstens einen Schaltzeitpunkt zu ermitteln, zu denen die Halbleitersteller angeschaltet werden.

9. Anordnung gemäß Anspruch 8, bei der die Halbleitersteller Thyristoren (A1, A2, B1, B2, C1, C2) umfassen.

10. Anordnung gemäß Anspruch 9 mit einer Einrichtung zur Ermittlung, ob alle Thyristoren (A1, A2, B1, B2, C1, C2) verloschen sind.

## Claims

1. Method for operating a synchronous machine (1) by means of a three-phase power controller (4) which is connected to a three-phase network, having the following steps:

    - determination of the phase difference between magnet-wheel voltage of the synchronous machine (1) and network voltage of the three-phase network,
    - determination of the rotational speed of the rotor of the synchronous machine,
    - determination of the phase position of the three-phase network,
    - determination of a decision characteristic number with the help of a stored data table which has been calculated in advance, which data table associates a decision characteristic number with value triples consisting of phase difference, phase position and rotational speed,
    - determination of at least one switching time point on the basis of the decision characteristic number, in which case the semiconductor controllers (6...8) are activated at the switching time point.

2. Method according to claim 1, wherein the decision characteristic number is used as the basis for ascertaining whether the present point in time is employed as a switching time point.

3. Method according to claim 2, wherein it is ascertained whether the switches (A1, A2, B1, B2, C1, C2) of the power controllers (6...8) are switched off, and only in this case is the present point in time employed as switching time point.

4. Method according to one of the preceding claims, wherein the decision characteristic number is compared with a definable threshold value in order to ascertain a switching time point.

5. Method according to one of the preceding claims, wherein the decision characteristic numbers of the data table are calculated from a torque curve resulting for the synchronous machine (1), which torque curve results on activation of the power controllers (6...8) for value triples consisting of phase difference, phase position and rotational speed.

6. Method according to claim 5, wherein the decision characteristic numbers of the data table take into consideration a maximum current occurring which results on activation of the power controllers (6...8) for value triples consisting of phase difference, phase position and rotational speed.

7. Method according to claim 5 or 6, wherein the decision characteristic numbers of the data table take into consideration both a mean torque over a definable period of time and also the effective torque over the period of time, which result on activation of the power controllers (6...8) for value triples consisting of phase difference, phase position and rotational speed.

8. Assembly for operating a synchronous machine (1), designed in order to execute a method according to one of the preceding claims, comprising

 - a three-phase power controller (6...8) which can be connected to a three-phase network and comprises at least two semiconductor controllers (A1, A2, B1, B2, C1, C2) for the phases (A, B, C) of the three-phase network,
 - a device for determining the phase difference between magnet-wheel voltage of the synchronous machine and network voltage of the three-phase network,
 - a device for determining the rotational speed of the rotor of the synchronous machine,
 - a device for determining the phase position of the three-phase network,
 - a storage device,
 - a data table stored in the storage device which associates a decision characteristic number with values for the phase difference, phase position and rotational speed,
 - a control facility designed in order to ascertain from the ascertained values for phase difference, phase position and rotational speed the decision characteristic number and from the decision characteristic number to ascertain at least one switching time point at which the semiconductor controllers are activated.

9. Assembly according to claim 8, wherein the semiconductor controllers comprise thyristors (A1, A2, B1, B2, C1, C2).

10. Assembly according to claim 9 having a device for ascertaining whether all the thyristors (A1, A2, B1, B2, C1, C2) are extinguished.


**Revendications**

1. Procédé pour faire fonctionner une machine (1) synchrone au moyen d'un régulateur (4) de courant triphasé, qui est raccordé à un réseau de courant triphasé, comprenant les stades suivantes :

 - détermination de la différence de phase entre la tension de roue polaire de la machine (1) synchrone et la tension du réseau triphasé,
 - détermination de la vitesse de rotation du rotor de la machine synchrone,
 - détermination de la position en phase du réseau triphasé,
 - détermination d'un indice de décision au moyen d'une table de données mémorisée et calculée à l'avance, qui associe un indice de décision à des triplés de valeur composés de la différence de phase, de la position en phase et de la vitesse de rotation,
 - détermination d'au moins un instant de commutation à l'aide de l'indice de décision, les régulateurs (6...8) à semi-conducteur étant connecté à l'instant de commutation.

2. Procédé suivant la revendication 1, dans lequel on détermine à l'aide de l'indice de décision si on utilise l'instant présent comme instant de commutation.

3. Procédé suivant la revendication 2, dans lequel on détermine si on déconnecte les commutateurs (A1, A2, B1, B2, C1, C2) des régulateurs (6...8) de courant triphasé et on utilise seulement dans ce cas l'instant présent comme instant de commutation.

4. Procédé suivant l'une des revendications précédentes, dans lequel on compare l'indice de décision à une valeur de seuil pouvant être fixée pour déterminer l'instant de commutation.

5. Procédé suivant l'une des revendications précédentes, dans lequel on calcule les indices de décision de la table de données à partir d'une courbe de rotation qui s'en déduit pour la machine (1) synchrone, qui provient de la connexion des régulateurs (6...8) de courant triphasé pour des triplés de valeur composés de la différence de phase, de la position en phase et de la vitesse de rotation.

6. Procédé suivant la revendication 5, dans lequel les indices de décision de la table de données prennent en compte un courant se produisant au maximum qui provient de la connexion des régulateurs (6...8) de courant triphasé pour des triplés de valeur composés de la différence de phase, de la position en phase et de la vitesse de rotation.

7. Procédé suivant la revendication 5 ou 6, dans lequel les indices de décision de la table de données prennent en compte à la fois un couple de rotation moyen sur une durée pouvant être fixée et le couple de rotation réel sur la durée, qui proviennent de la connexion des régulateurs (6...8) de courant triphasé pour des triplés de valeur composés de la différence de phase, de la position en phase et de la vitesse de rotation.

8. Agencement pour faire fonctionner une machine (1) synchrone, conformé pour effectuer un procédé suivant l'une des revendications précédentes, comprenant

- un régulateur (6....8) de courant triphasé qui peut être raccordé à un réseau de courant triphasé et qui comprend au moins deux régulateurs (A1, A2, B1, B2, C1, C2) à semi-conducteur pour les phases (A, B, C) du réseau à courant triphasé,
- un dispositif de détermination de la différence de phase entre la tension de roue polaire de la machine synchrone et la tension du réseau à courant triphasé,
- un dispositif de détermination de la vitesse de rotation du rotor de la machine synchrone,
- un dispositif de détermination de la position en phase du réseau de courant triphasé,
- un dispositif de mémorisation,
- une table de données mémorisée dans le dispositif de mémorisation et associant un indice de décision à des valeurs de la différence de phase, de la position en phase et de la vitesse de rotation,
- un dispositif de commande conformé pour déterminer, à partir des valeurs déterminées de la différence de phase, de la position en phase et de la vitesse de rotation, l'indice de décision et à partir de l'indice de décision au moins un instant de commutation auquel les régulateurs à semi-conducteur sont connectés.

9. Agencement suivant la revendication 8, dans lequel les régulateurs à semi-conducteur comprennent des thyristors (A1, A2, B1, B2, C1, C2).

10. Agencement suivant la revendication 9, comprenant un dispositif de détermination du point de savoir si tous les thyristors (A1, A2, B1, B2, C1, C2) sont éteints.

FIG 1

FIG 2

FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010008814